(19) Europäisches Patentamt

European Patent Office

Office européen des brevets

(11) EP 1 548 058 B1

(12) **EUROPEAN PATENT SPECIFICATION**

(45) Date of publication and mention
of the grant of the patent:
**29.03.2006 Bulletin 2006/13**

(51) Int Cl.:
***C08L 21/00*** (2006.01)   ***C08L 23/08*** (2006.01)

(21) Application number: **04257734.6**

(22) Date of filing: **13.12.2004**

(54) **Gloss reducing polymer composition**

Mattierende Polymerzusammensetzung

Composition de polymère de matage

(84) Designated Contracting States:
**DE FR GB**

(30) Priority: **23.12.2003 US 531868 P**

(43) Date of publication of application:
**29.06.2005 Bulletin 2005/26**

(73) Proprietor: **ROHM AND HAAS COMPANY**
**Philadelphia,**
**Pennsylvania 19106-2399 (US)**

(72) Inventor: **Rheenen, Paul Van**
**Warminster,**
**Pennsylvania 18974 (US)**

(74) Representative: **Buckley, Guy Julian et al**
**ROHM AND HAAS (UK) LTD.**
**European Patent Department**
**28th Floor, City Point**
**One Ropemaker Street**
**London EC2Y 9HS (GB)**

(56) References cited:
**EP-A- 0 558 263**       **US-A- 5 866 658**
**US-B1- 6 534 592**

**Description**

This invention relates to polymer compositions for reducing gloss, which can be used in thermoplastic formulations, including capstock formulations, as well as in other applications. These compositions are especially useful for extruding into articles and for application to structural plastics such as poly(vinyl chloride) and acrylonitrile-butadiene-styrene (ABS), to prepare composites exhibiting low gloss. The invention also extends to composite articles exhibiting low gloss.

Poly(vinyl chloride) resin (hereafter "PVC") has a combination of properties which make it particularly suitable for use as a structural material. In applications in which impact strength of the structural plastic is important, the PVC can be formulated with impact-modifier resins which improve the impact strength of the resulting composition. Such high impact-strength PVC compositions can be readily extruded or otherwise formed into a variety of articles which have excellent impact strength, toughness and other desired mechanical and chemical properties; for example as siding for buildings, shutters, technical profiles for window and door frames, rain carrying systems (e.g., gutters and downspouts), and fencings.

Such PVC compositions, however, have relatively poor weatherability characteristics, particularly poor color retention in darker grade colors such as browns and blues. The color is imparted to the PVC composition, for instance, by the use of colorants such as pigments or dyes, but exposure to sunlight causes unappealing changes in the colors. Such unappealing changes are more severe for darker than for light colors. Poor weatherability characteristics also causes reduction in impact strength leading to embrittlement and cracking and/or mechanical failure of the articles prepared from such compositions. Typically, another resinous material is applied over the PVC to provide a surface that can withstand sunlight and other environmental conditions. Such a surfacing material is called "capstock." The capstock generally is much thinner than the substrate plastic, typically being about 10% to about 25% of the total thickness of the composite (i.e. the capstock and substrate plastic).

A suitable capstock material must possess a certain combination of processing properties and other physical, chemical, and aesthetic properties, including exceptional weathering characteristics such as excellent color retention and high impact strength. Moreover, the capstock also must not affect adversely those properties which make PVC such a widely used building material. In particular, the capstock compositions that are particularly aesthetically desirable do not have a shiny appearance but rather have a flat, or reduced gloss appearance.

Various types of polymer-based compositions have been disclosed for use as capstock, including PVC-based compositions and acrylic resin based compositions. A number of these polymer-based compositions are described in European Patent Application EP-A-473,379 which is incorporated herein by reference for its teaching of capstock compositions and substrates. US Patent No. 6;534,592 (EP1061100) teaches a blend of acrylic-based core/shell polymers, including in combination with flatting or matting agents and UV stabilizers. US Patent No. 5,346,954 (EP269324) teaches matting agents comprising polymeric materials that are large in particle size, typically 2 to 15 microns. These materials are typically made of cross-linked rubber polymer particles so that they remain as individual particles during melt processing.

US Patent No. 5,223,573 (EP558263) teaches polymer blends which exhibit reduced surface gloss while maintaining impact and flow properties. The blends comprise an aromatic polycarbonate resin, an acrylonitrile-butadiene-styrene (ABS) graft copolymer and an ionomeric resin. The ionomeric resin comprises a polymer of α-olefin with an olefin content of said polymer being at least 50 mol percent based on the polymer.

Problems with the above approaches include the difficulty and expense of preparing core/shell polymers, the increasing gloss achieved as the processing temperature increases, the incompatibility of acrylic capstock base polymers with acid salt polymers designed for polycarbonate/ABS polymers, the expense of adding matting agents and/or the bowing of extruded capstock due to different coefficients of expansion and cooling rates. What is needed is a cost-effective, weatherable, capstock material having a high impact strength and adequate color retention, which addresses such problems.

The present invention provides a thermoplastic composition exhibiting reduced gloss, comprising: (a) a thermoplastic polymer comprising a homopolymer or copolymer derived from polymerizing at least one ethylenically unsaturated monomer; (b) at least one percent (1%) by weight of an acid functional acrylic polymer comprising a copolymer with an acid functionality level of at least 0.1 milliequivalent per gram of acid functional acrylic polymer, derived from polymerizing at least one ethylenically unsaturated monomer having acid functionality with at least one other ethylenically unsaturated monomer, wherein the acrylic content of the acid functional acrylic polymer is greater than 50 mol percent; and (c) at least 0.1 milliequivalents of a basic metal salt per gram of the acid functional acrylic polymer. The present invention further provides a synthetic composite comprising: (a) an extrudable thermoplastic substrate layer and (b) an extrudable thermoplastic capstock layer disposed thereon comprising (i) a thermoplastic polymer comprising a homopolymer or copolymer derived from polymerizing at least one ethylenically unsaturated monomer, (ii) at least one percent (1%) by weight of an acid functional acrylic polymer comprising a copolymer with an acid functionality level of at least 0.1 milliequivalent per gram of acid functional acrylic polymer, derived from polymerizing at least one ethylenically unsaturated monomer having acid functionality with at least one other ethylenically unsaturated monomer, wherein the acrylic content of the acid functional acrylic polymer is greater than 50 mol percent; and (iii) at least 0.1 milliequivatents of a basic metal salt per gram of the acid functional acrylic polymer.

Surprisingly, the addition of an acid functional acrylic polymer and a basic metal salt, to a thermoplastic polymer, including a capstock base polymer, provides gloss reduction at elevated processing conditions. The term "acrylic" means that the polymer contains copolymerized units deriving from (meth)acrylic monomers such as, for example, (meth) acrylate esters, (meth)acrylamides, (meth)acrylonitrile, and (meth)acrylic acid. Use of the term "(meth)" followed by another term such as, for example; acrylate or acrylarnide, as used throughout the disclosure, refers to both acrylates or acrylamides and methacrylates and methacrylamides, respectively. The acrylic content of the acid functional acrylic polymer must be greater than 50 mol percent based on the polymer.

The term "reduced gloss" refers to a surface having an average gloss value of 60 or less as measured with a 75 degree incident angle geometry gloss meter. The term "molecular weight" used herein refers to the weight average molecular weight of polymer molecules as determined by the gel permeation chromatography method with polystyrene standards. The term "crosslinker" used herein refers to multifunctional monomers capable of forming multiple covalent bonds between polymer molecules of the same type. The term "parts" used herein is intended to mean "parts by weight". Unless otherwise stated, "total parts by weight" do not necessarily add to 100. The term "weight percent" used herein is intended to mean "parts per hundred" wherein the total parts add to 100.

Thermoplastic polymers may be any homopolymer or copolymer that is rendered soft and moldable by heat. Such polymers may be made by emulsion, bulk, suspension or solution polymerization. Thermoplastic polymers are particularly useful as a capstock base polymer. Suitable capstock base polymer may be any combination of a number of well known polymer-based compositions used as capstock, including PVC-based compositions and acrylic resin based compositions, with or without multi-layered or core/shell particles. A number of these polymer-based compositions are described in European Patent Application EP-A-473,379 which is incorporated herein by reference for its teaching of capstock compositions and substrates. Preferred capstock base polymers comprise an aqueous emulsion homopolymer or copolymer derived from polymerizing at least one ethylenically unsaturated monomer. More preferred capstock base polymers comprise a blend of acrylic-based core/shell polymers.

When formulating a capstock, the capstock base polymer preferably comprises a first "medium rubber" acrylic-based core/shell polymer with or without a second "high rubber" acrylic-based core/shell polymer; having from 50 to 100, preferably from 75 to 95, and most preferably 75 to 85 parts by weight of a first "medium rubber" core/shell polymer and from 0 to 50 parts, preferably from 5 to 30, and most preferably 15 to 25 parts by weight of a second "high rubber" core/shell polymer. The capstock base polymer may have other or additional stages, which are polymerized after the formation of the rubbery core stage. The first "medium rubber" core/shell polymers of the present invention can contain from 30 to 70, preferably from 35 to 60, and most preferably from 35 to 45 parts by weight of a rubbery core polymer and from 30 to 70, preferably 40 to 65, most preferably 55 to 65 parts by weight of a shell polymer grafted to the core polymer.

Such rubbery core polymers can contain from 45 to 99.9, preferably from 80 to 99.5, and most preferably from 94 to 99.5 parts by weight of units derived from at least one C1 - C8 alkyl acrylate monomer, from 0 to 35, preferably from 0 to 20, most preferably from 0 to 4.5 parts by weight of units derived from at least one ethylenically unsaturated copolymerizable monomer different from the at least one C1 - C8 alkyl acrylate monomer, and from 0.1 to 5, preferably from 0.5 to 2, most preferably from 0.5 to 1.5 parts by weight of units derived from at least one crosslinker or graftlinker.

As long as the core polymer remains rubbery, the core polymer may also contain additional units derived from at least one ethylenically unsaturated copolymerizable monomer different from the C1 - C8 alkyl acrylate monomers such as C1- C8 alkyl methacrylates, vinyl aromatic monomers, vinyl-unsaturated carboxylic acids monomers, and nitrogen-containing vinyl unsaturated monomers.

The shell polymer grafted to the core polymer of the first "medium rubber" core/shell polymers of the preferred capstock base polymer contains from 80 to 99, preferably from 85 to 97, and most preferably from 92 to 96 parts by weight of units derived from at least one C1 C8 alkyl methacrylate monomer, and from 1 to 20, preferably from 10 to 20 parts by weight of units derived from at least one ethylenically unsaturated copolymerizable monomer different from the at least one C1 - C8 alkyl methacrylate monomer.

Suitable polymers for the outer shell of the first core/shell polymer require that they have a glass transition temperature ("Tg") above 20°C and therefore may also contain one or more units derived from ethylenically unsaturated copolymerizable monomers which are different from the at least one C1 - C8 alkyl methacrylate monomer.

The shell molecular weights of the shell polymer are in the range of from 10,000 to 1,000,000 and preferably in the range of from 50,000 to 500,000 g/mol. Controlling molecular weights in this range can be accomplished by one of various methods known in the art and is preferably accomplished by preparing the outer shell polymers in the presence of one or more chain transfer agents. Increasing the chain transfer agent amount lowers the shell molecular weight. The amount of chain transfer agent present can be in the range of from 0 to 5, and preferably from 0.001 to 1.0, weight percent based on shell polymer weight.

The second "high rubber" core/shell polymers of the preferred capstock base polymer contains from 70 to 92, preferably from 72 to 88, and most preferably from 75 to 85 parts by weight of a rubbery core polymer and from 8 to 30, preferably from 12 to 28, and most preferably from 15 to 25 parts by weight of a shell polymer grafted to the core polymer.

Such rubbery core polymers contain from 50 to 99.9, preferably from 80 to 99.9, and most preferably from 90 to 99.9 parts by weight of units derived from at least one C1 - C8 alkyl acrylate monomer, from 0 to 45, preferably from 0 to 15, and most preferably from 0 to 5 parts by weight of units derived from at least one ethylenically unsaturated copolymerizable monomer different from the at least one C1 - C8 alkyl acrylate monomer, and from 0.1 to 5, preferably from 0.5 to 2, most preferably from 0.7 to 1.5 parts by weight of units derived from at least one crosslinker and graftlinker. It is preferred that the rubbery core polymers contain from 0.0001 to 0.1 parts by weight total of units derived from at least one crosslinker and at least one graftlinker.

As long as the core polymer remains rubbery, the core polymer of the second "high rubber" core/shell polymer may also contain additional units derived from at least one copolymerizable monomers such as C1 - C8 alkyl (moth) acrylate, vinyl aromatic monomers such as styrene, vinyl-unsaturated carboxylic acids monomers such as methacrylic acid, and nitrogen-containing vinyl unsaturated monomers such as acrylonitrile. The C1 - C8 alkyl (meth)acrylates are the preferred additional monomers in view of their superior weatherability.

The shell polymer grafted to the core polymer of the second "high rubber" core/shell polymers of the preferred capstock base polymer contains from 50 to 100, preferably from 90 to 100, and most preferably from 98 to 99.9 parts by weight of units derived from at least one C1 - C8 alkyl methacrylate monomer. The shell molecular weight is in the range of from 25,000 to 350,000, preferably in the range of from 50,000 to 200,000, and most preferably in the range of from 80,000 to 150,000 g/mol. If the shell molecular weight is too low then the degree of grafting is considerably reduced.

Shell molecular weights can be controlled by various methods known in the art, the most preferred method is to use a chain transfer agent in the amounts of from 0.005 to 5.0, preferably from 0.05 to 2.0, and most preferably from 0.1 to 2.0 weight percent based on shell polymer weight during the shell polymerization. A chain transfer agent may be used to control the molecular weight of the shell polymer and is important for providing capstock compositions that are able to be processed. If less than 0.005 weight percent chain transfer agent is used then the shell molecular weight becomes too high and the viscosity increases, thereby resulting in greater energy needed for processing. It the chain transfer agent amount is greater than 5.0 weight percent then the degree of grafting of shell polymer becomes too low resulting in degraded performance.

Suitable polymers for the outer shell of the second core/shell polymer require that they have a glass transition temperature ("Tg") above 20°C and therefore may also contain one or more units derived from ethylenically unsaturated copolymerizable monomers which are different from the at least one C1 - C8 alkyl methacrylate monomer.

One or more chain transfer agents can be used to control the molecular weight of the shell polymer of the second "high rubber" core/shell polymer. Common chain transfer agents or mixtures thereof known in the art include the C4 - C18 alkyl mercaptans, mercapto-group-containing acids, thiophenols, carbon tetrabromide, carbon tetrachloride, and the like. They may be used alone or as mixtures thereof.

An acid functional acrylic polymer is blended with the thermoplastic polymer at levels of at least one percent (1%) by weight and preferably at levels of at least five percent (5%) by weight. The term "acrylic" means that the polymer contains copolymerized units deriving from (meth)acrylic monomers such as, for example, (meth)acrylate esters, (meth) acrylamides, (meth)acrylonitrile, and (meth)acrylic acid. Use of the term "(meth)" followed by another term such as, for example, acrylate or acrylamide, as used throughout the disclosure, refers to both acrylates or acrylamides and methacrylates and methacrylamides, respectively. The acrylic content of the acid functional acrylic polymer must be greater than 50 mol percent based on the polymer. In formulating a capstock, the blending can be done by blending the capstock base polymer and the acid functional acrylic polymer before isolation to powder by spray drying, freeze drying ,or coagulation and drying. If the acid functional acrylic polymer can be isolated by itself it can also be dry blended with a powder of the capstock base polymer. The acid functional acrylic polymer comprises a copolymer with an acid functionality level of at least 0.1 milliequivalent of acid functionality per gram of acid functional acrylic polymer. Preferably the acid functionality level is no greater than 3.0 milliequivalent of acid functionality per gram of acid functional acrylic polymer to avoid water sensitivity.

The copolymer of the acid functional acrylic polymer is derived from polymerizing at least one ethylenically unsaturated monomer having acid functionality with at least one other ethylenically unsaturated monomer. The polymer can comprise an emulsion polymer, a suspension polymer, a bulk polymerized polymer, a solution polymerized polymer or any combination of the foregoing. Preferably the acid functional polymer is an aqueous emulsion polymer. The term "emulsion polymer" means an emulsion polymerized addition polymer.

Ethylenically unsaturated monomers include, for example, (meth)acrylic ester monomer including methyl (meth) acrylate, ethyl (meth)acrylate, butyl (meth)acrylate, 2-ethylhexyl (meth)acrylate, decyl (meth)acrylate, lauryl (meth)acrylate, stearyl (meth)acrylate, hydroxyethyl (meth)acrylate, hydroxypropyl (meth)acrylate, aminoalkyl (meth)acrylate, N-alkyl aminoalkyl (meth)acrylate; N,N-dialkyl aminoalkyl (meth)acrylate; N-alkoxyethyl (meth)acrylate; urieido (meth) acrylate; (meth)acrylonitrile; (meth)acrylamide; styrene or alkyl-substituted styrenes; butadiene; ethylene; vinyl ester monomer such as, for example, vinyl acetate, vinyl propionate, vinyl butyrate, vinyl 2-ethyl hexanoate, vinyl laurate, vinyl pivalate, 1-methylvinyl acetate, and vinyl esters of branched carboxylic acids having 5-12 carbon atoms (as vinyl versatate); vinyl chloride, vinylidene chloride, and N-vinyl pyrollidone; allyl (meth)acrylate, diallyl phthalate, ethylene glycol di(meth)acrylate, 1,3-butylene glycol di(meth)acrylate, 1,6-hexanediol di(meth)acrylate, and divinyl benzene; (meth) acrylic acid, crotonic acid, itaconic acid, vinyl sulfonic acid, 2-acrylamidopropane sulfonate, sulfoethyl methacrylate, phosphoethyl methacrylate, fumaric acid, maleic acid, monomethyl itaconate, monomethyl fumarate, monobutyl fumarate, and maleic anhydride.

The glass transition temperature ("Tg") of the emulsion polymer is from -80 °C to 150 °C. "Glass transition temperature" or "$T_g$" as used herein, means the temperature at or above which a glassy polymer will undergo segmental motion of the polymer chain. Glass transition temperatures of a polymer can be estimated by the Fox equation [Bulletin of the American Physical Society 1, 3, page 123 (1956)] as follows:

$$\frac{1}{T_g} = \frac{w_1}{T_{g(1)}} + \frac{w_2}{T_{g(2)}}$$

For a polymer of monomers $M_1$ and $M_2$, $w_1$ and $w_2$ refer to the weight fraction of the two monomers, and $T_{g(1)}$ and $T_{g(2)}$ refer to the glass transition temperatures of the two corresponding homopolymers in degrees Kelvin. For polymers containing three or more monomers, additional terms are added ($w_n/T_{g(n)}$). The $T_g$ of a polymer can also be measured by various techniques including, for examples, differential scanning calorimetry ("DSC"). The particular values of $T_g$ reported herein are measured based on DSC where the scan rate is 10°C/min. The glass transition temperatures of homopolymers may be found, for example, in "Polymer Handbook", edited by J. Brandrup and E.H. Immergut, Interscience Publishers.

The polymerization techniques used to prepare aqueous emulsion-copolymers are well known in the art. In the emulsion polymerization process conventional surfactants may be used such as, for example, anionic and/or nonionic emulsifiers, as well as conventional chain transfer agents. The amount of surfactant used is usually 0.1% to 6% by weight, based on the weight of monomer. Either thermal or redox initiation processes may be used.

The emulsion polymer may be prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometric patterns such as, for example, core/shell or core/sheath particles, core/shell particles with shell phases incompletely encapsulating the core, core/shell particles with a multiplicity of cores, and interpenetrating network particles. In all of these cases the majority of the surface area of the particle will be occupied by at least one outer phase and the interior of the particle will be occupied by at least one inner phase. Each of the stages of the multi-staged emulsion polymer may contain the same monomers, surfactants, chain transfer agents, etc. as disclosed herein-above for the emulsion polymer. In the case of a multi-staged polymer particle the Tg for the purpose of this invention is to be calculated by the Fox equation as detailed herein using the overall composition of the emulsion polymer without regard for the number of stages or phases therein. Similarly, for a multi-staged polymer particle the amount of acid monomer shall be determined from the overall composition of the emulsion polymer without regard for the number of stages or phases therein. The polymerization techniques used to prepare such multistage emulsion polymers are well known in the art such as, for example, US Patents No. 4,325,856; 4,654,397; and 4,814,373. The average particle diameter of the emulsion copolymer particles is preferred to be from 30 nanometers to 500 nanometers, as measured by a BI-90 Particle Sizer. More preferred is an average particle diameter in the range of 50-250 nanometers.

A basic metal salt is added to the acid functional acrylic polymer at levels of at least 0.1 milliequivalents of metal per gram of acid functional acrylic polymer and preferably at levels of at least 0.6 milliequivalents of metal per gram of acid functional acrylic polymer. Gloss decreases as the metal salt level increases and then levels off. Examples of basic metal salts include zinc oxide, zirconium oxide, magnesium oxide or hydroxide, calcium oxide or hydroxide, alkali metal hydroxides, phosphates, borates, silicates or carbonates (for example sodium, lithium, or potassium hydroxide) and other basic metal salts chosen from metal salts that are low in color, as well as combinations of the above. The valency of the metal in the metal salt can be 1, 2, 3 or higher, but it is preferred to be 2 or higher.

The metal salts can be added to the acid functional acrylic polymer before or after isolation, but emulsion polymers may be neutralized with the basic metal salt while dispersed in the wet state. The blend is then processed in an extruder where low gloss polymer is produced. It is suspected that due to melting and mixing, the acid functional acrylic polymer is neutralized by the metal salts to form ionomers. For emulsion polymers, where the acid functional acrylic polymer is pre-neutralized, ionomers are pre-formed.

The blended composition comprising an acid functional acrylic polymer, a basic metal salt and a thermoplastic polymer, may further contain from 0 to 5, preferably from 0.5 to 3, most preferably from 1 to 2 parts by weight of at least one UV light stabilizer. Many suitable UV light stabilizers are described in "*Plastics Additives and Modifiers Handbook, Ch. 16 Environmental Protective Agents*". J. Edenbaum, Ed.., Van Nostrand (1992) pp. 208 - 271, which is incorporated herein by reference for its disclosure of UV light stabilizers. Preferred UV light stabilizers are of the HALS-, benzotriazole-, and benzophenone-type compounds. These compounds further enhance the weatherability of a capstock composition. Many such compounds are commercially available from Ciba Specialty Chemicals (Tarrytown, New York) under the TINUVIN trade name.

The blended composition comprising an acid functional acrylic polymer, a basic metal salt and a thermoplastic polymer, may further contain from 0 to 100 parts by weight of at least one polyvinyl chloride resin ("PVC"). Because total parts by weight in a capstock composition do not necessarily add to 100, the addition of a maximum of 100 parts by weight PVC to the capstock composition results in a weight ratio of PVC to first and second core/shell polymers of 100: 100, or about 50 weight percent. The addition of other components follows this weight fraction protocol. Although the addition of PVC has a tendency to reduce the gloss of the capstock, it also has the effect of reducing the ability of the capstock to withstand weathering.

The blended composition comprising an acid functional acrylic polymer, a basic metal salt and a thermoplastic polymer, may further contain from 0 to 30 parts by weight of at least one pigment or filler. Many suitable pigments are described in *"Plastics Additives and Modifiers Handbook, Section VIII, "Colorants"*, J. Edenbaum, Ed., Van Nostrand (1992), pp. 884 - 954 which is incorporated herein by reference for its disclosure of various pigments useful for coloring plastics. Examples include organic pigments and inorganic pigments, and those preferred are resistant to UV and visible light exposure such as titanium dioxide (white), clays (beige) and slate blue pigment (blue).

The blended composition comprising an acid functional acrylic polymer, a basic metal salt and a thermoplastic polymer, may further contain from 0 to 5 parts by weight of a powder flow aid. Suitable powder flow aids may be incorporated in the spray drying process used for recovering dry powder capstock composition. An example is stearic acid-coated calcium carbonate. Flow aids are further described in U.S. Patent No. 4,278,576 which is incorporated by reference for its disclosure of flow aids useful for spray drying emulsions of core/shell polymers.

Any known processing technique may be employed in co-extruding a blended composition of the present invention onto a substrate. The blended composition is prepared by mixing a thermoplastic polymer, such as a capstock base polymer, an acid functional acrylic polymer and a basic metal salt. Additional components in the resin composition, such as UV stabilizers, pigments, PVC resin, matting agents, flow aids, processing aids, lubricants, fillers, and the like, may be blended in either powder or liquid form, such as 0 to 35 parts by weight of a processing aid. If a pelletized form of a blended composition is preferred for preparing capstock film, sheet, and other various articles instead of a powder (e.g., to avoid dust), then the powder may be formed into pellets using any suitable plastics pelletization equipment and methods known in the plastics processing art. This can be especially useful in combination with the mixing step wherein the components of the resin composition can be compounded (mixed) and pelletized using standard plastics processing equipment.

The mixture is fed into a plastics processing device, such as an extruder, which is well known to the plastics-processing art. Typically, an extruder having a feed section and a metering section is utilized. Further details can be found in *Principles of Polymer Processing,* by Z. Tadmor and C. G. Gogos, John Wiley, 1979.

Forming the melt into a melt layer in a die located at the end of the extruder is done within a suitable plastics forming device, such as a die, as is known in the art, including multi-manifold dies and feed block dies. For preparing capstock it is best to form the melt into a thickness of from 0.1 to 1.0 mm thick, which is useful as protective layers for PVC building products (e.g., PVC siding, window frames, fencing, decking, and rain gutters).

The extruded melt layer is then cooled in accordance with known plastics processing steps, including by passing the melt layer through a cooling fluid medium such as a liquid (i.e., water) or a gas (i.e., air) having a temperature sufficiently low to cause the capstock to harden. The temperature of the cooling fluid should be kept below the hardening temperature, i.e. Tg, of the polymeric component having the highest Tg in the composition. As an example, capstock compositions including core/shell polymers having PMMA shells of a Tg of about 100°C and require a cooling fluid, i.e., water, having a temperature of about 80°C or less.

Alternatively from, or in addition to using a cooling fluid, the melt layer can be passed and/or pressed between chilled rollers which may be polished smooth and/or have an embossing pattern. It is particularly preferable for capstock used for PVC siding applications to have rollers that provides an embossing pattern that produces a wood-grain effect into the capstock. Other embossing patterns are also envisioned for the chiller rollers, such as a matte finish. Such wood grain effect and matte-finish embossing patterns also tend to further reduce the gloss of the capstock and are therefore particularly desirable for use in the cooling step of preparing reduced-gloss weatherable impact-resistant capstock.

A method for making a synthetic resin composite is also envisioned which involves extruding a plurality of thermoplastic extrusion compounds and applying them together in a particular fashion. At least one of the thermoplastic extrusion compounds will be a capstock composition and disposed upon at least one other thermoplastic extrusion compound functioning as at least one substrate layer. It is also envisioned that the capstock composition can be extruded in multiple layers to allow for additional protection on one or more sides of the composite.

A typical capstock can be from 0.1 to 1.0 mm thick, whereas the structural plastic can be about 0.8 to 1.2 mm thick for PVC siding applications, and from 1.2 to 3.0 mm for PVC profile applications (e.g., PVC window frames, fencing, decking, and rain gutters). If the capstock and substrate are too thick then the articles made therefrom will suffer too great cost, whereas if they are too thin then they will be lacking in strength.

The substrate layer may also be formed by an extrusion of a thermoplastic resin. The thermoplastic resin may be any of the extrudable thermoplastic resins known in the art, examples of which are described in U.S. Patent No. 5,318,737, incorporated herein by reference for its disclosure of extrudable resins and extrusion processes.

Preferred extrudable thermoplastic resins which are especially useful for making building products, but which require protection from a capstock layer against weathering and physical impacts, include PVC, chlorinated polyvinylchloride ("CPVC"), high impact polystyrene ("HIPS"), polypropylene ("PP") and acrylonitrile-butadiene-styrene ("ABS"). It is also preferred that the extrudable thermoplastic resins of the capstock and substrate layers adhere to one another to prevent delamination of the composite. Adhesion can be promoted through selection of resins which are compatible and/or miscible with one another (e.g., polymethyl methacrlyate-based resins and chlorinated resins). Various methods known in the art, such as surface treatment with adhesion promoters (i.e., corona discharge) and/or application of an adhesive, are envisioned for improving the adhesion between the substrate and capstock layers of the composite.

Synthetic resin composites can have a substrate layer of an extrudable thermoplastic resin, and a capstock layer. The composites can be formed for example, by laminating preformed sheets or films of PVC structural plastic and the capstock together by thermal fusion or by adhesive.

Preferred extrudable thermoplastic resins used as the substrate layer include PVC, CPVC, HIPS, PP and ABS. Preferably, the capstock layer has an average gloss measured at a 75 degree incident angle geometry of less than 60, preferably less than 50, and most preferably below 45. Also, the capstock layer is preferred to have a drop dart impact strength of greater than 25 in-lbs per 40mils of thickness at 23°C according to D4226. It is also preferred that the capstock layer has a AE value of 2.0 or less after 3000 hours of accelerated weathering according to ASTM D4329 Cycle C.

## EXAMPLES

In the following Examples, core-shell polymers are prepared using a free-radical polymerization process in an appropriate kettle equipped with a stirrer, means for controlling the reactor temperature, means for dropping the formed polymer emulsion to a container, means for recording temperature, means for adding emulsifier solution, means for adding initiator, and means for adding monomers. Particle size of the emulsion particles is measured using a Nanosizer BI-90 (Brookhaven Instruments, Holtsville, New York).

Polymer powders are prepared according to the spray-drying process described in U.S. Patent 4,278,576; from 0 to 3% by weight of a calcium carbonate flow aid is optionally added to the emulsion during spray drying. Powder particle sizes are measured using a Coulter Laser Particle Size Analyzer, Model LS-130 instrument (Beckman Coulter, Inc., Fullerton, California).

Dry powders are mixed to form dry powder mixtures without melting using a high intensity mixer. This material is processed in a Haake twin screw (TW100) extruder at 80 rpms with the zones and 50 mm ribbon die set at specified temperatures. Films are extruded at about 40 mils in thickness. Films are cut to produce specimens for QUV accelerated weathering analysis and Drop Dart Impact Testing (6.5 x 10 x 1 mm) (ASTM D4226A). QUV accelerated weathering is done according to ASTM D4329 Cycle C (Q-UVA 340 light source; eight hours light , four hours dark with condensation at 50°C).

Color-hold is measured by determining changes in light transmission and color as a result of the QUV accelerated weathering using a Hunter Lab colorimeter (Hunter Associates Laboratory, Inc., Reston, Virginia) to measure the ΔE, ΔL, Δa, and Δb values. The procedure for determining these values are provided in Instruction Manual: HUNTERLAB TRISTIMULUS COLORIMETER MODEL D25P-9 (rev. A). Measurements are made every 500 hours of QUV exposure up to 5000 hours total exposure. Average gloss values are measured using a 75 degree incident angle geometry glossmeter (BYK-Gardner USA, Chicago, Illinois).

The following abbreviations are employed in the examples:

AA = Acrylic Acid
EA = Ethyl Acrylate
STY = Styrene
ALMA = allyl methacrylate
BA = butyl acrylate
MMA = methyl methacrylate
pMMA = poly(methyl methacrylate)
n DDM = n-dodecyl mercaptan

The following examples are illustrative of the invention.

**Example 1: Core/Shell Capstock Base Polymer**

This example provides a core/shell polymer of 40% (99 BA/1 ALMA) first stage and 60% (95 MMA/5 BA/0.18 n DDM) second stage where the second stage is graft-linked to the first stage.

The first stage monomer emulsion is prepared by blending 673.20 grams of butyl acrylate, 6.80 grams of allyl methacrylate, 36.78 grams of sodium dodecylbenzenesulfonate (10% in water), and 340 grams of deionized water. A reactor containing 810 grams deionized water and 0.47 grams acetic acid is heated to 57°C while its contents are sparged with nitrogen for 30 minutes. Next 11.05 grams of a 6% water solution of sodium formaldehyde sulfoxylate is charged to the reactor and rinsed with 10 grams of water. Next is charged 48.81 grams of a polymer emulsion latex (33.47% by weight, 40 nm particle size) consisting of polyethyl acrylate- co- methyl methacrylate (50/50) followed by a rinse of 20 grams of water. The initially prepared monomer emulsion and 13.26 grams of 5% t-butyl hydroperoxide initiator are then separately fed into the reactor over 45 minutes. The polymerization reaction reaches a peak temperature, which is then adjusted to 78 °C at the end of the monomer and initiator feeds. The particle size at the end of the first stage is 145 to 155 nm.

The second stage monomer emulsion is prepared by blending 969 grams of methyl methacrylate, 51 grams of butyl acrylate, 1.83 grams of n-dodecyl mercaptan,0.5 grams of sodium carbonate, 40.95 grams of 10% sodium dodecylbenzenesulfonate and 660 grams of deionized water. After stage one is complete, 46.4 grams of 6% sodium formaldehyde sulfoxylate is added to the reactor with 10 grams of rinse water. This addition is followed by a gradual feed of the second monomer emulsion and a co-feed of 27.85 grams of 5% t-butyl hydroperoxide initiator over 90 minutes. The reaction is maintained at 85 °C and held at this temperature for an additional 30 minutes after feeds. The reaction mixture is subsequently cooled. The total solids weight fraction is 45-46%, the final particle size at the end of the second stage is 180 - 200 nm, and the pH is 5.0.

A polymer powder is prepared according to the spray-drying process described in US 4,278,578 and from 0 to 3% by weight of calcium carbonate flow aid is optionally added to the emulsion during spray drying. Optionally, the polymer can be isolated by freeze drying, or coagulation with salts followed by drying, or by a devolatilizing extruder.

**Example 2: Core/Shell Capstock Base Polymer**

This example provides a core/shell polymer of 40% (99 BA/1 ALMA) first stage and 60% (80 MMA/20 BA/0.09 n DDM) second stage where the second stage is graft-linked to the first stage.

This example uses the same first stage as example 1, but the second stage is as shown in this example. The second stage monomer emulsion is prepared by blending 816 grams of methyl methacrylate, 204 grams of butyl acrylate, 0.915 grams of n-dodecyl mercaptan, 0.5 grams of sodium carbonate, 40.95 grams of 10% sodium dodecylbenzenesulfonate and 660 grams of deionized water. After stage one is complete, 46.4 grams of 6% sodium formaldehyde sulfoxylate is added to the reactor with 10 grams of rinse water. This addition is followed by a gradual feed of the second monomer emulsion and a co-feed of 27.85 grams of 5% t-butyl hydroperoxide initiator over 90 minutes. The reaction is maintained at 85 °C and held at this temperature for an additional 30 minutes after feeds. The reaction mixture is subsequently cooled. The total solids weight fraction is 45-46%, the final particle size at the end of the second stage is 180 - 200 nm, and the pH is 5.0.

A polymer powder is prepared according to the spray-drying process described in US 4,278,578 and from 0 to 3% by weight of calcium carbonate flow aid is optionally added to the emulsion during spray drying. Optionally, the polymer can be isolated by freeze drying, or coagulation with salts followed by drying, or by a devolatilizing extruder.

**Example 3**

This examples demonstrates a commercial capstock material, Acryligard™ CS102, available from Rohm and Haas Company, combined with a conventional matting agent, as described in US Patent No. 5,346,954. This material is processed in a Haake twin screw (TW100) extruder at 80 rpms with the zones and 50 mm ribbon die set at the temperatures shown in the table. Films are extruded at about 40 mils in thickness. Table 1 shows the effect of increasing process temperature on the gloss of the capstock.

**Table 1** Effect of Process Temperature on Capstock Gloss

| Z1/Z2/Z3/Die °C | 75°Gloss |
|---|---|
| 150/160/160/175 | 14.4 |
| 160/180/180/180 | 21.6 |

Table continued

| Z1/Z2/Z3/Die °C | 75°Gloss |
|---|---|
| 160/180/180/190 | 27.1 |
| 170/190/195/195 | 32.1 |

## Example 4

This examples demonstrates that combining a capstock base polymer with an acid functional acrylic polymer without the basic metal salt will give low gloss, but the gloss will increase with processing temperature. Table 2 shows the effect of blending an acid functional acrylic polymer Elastene™ A-10, available from Rohm and Haas Company, with the capstock base polymer without the basic salt. Table 3 shows the effect of blending 100 parts capstock base polymer of Example 2 with 15 parts of an acid functional acrylic polymer Elastene™ A-10, available from Rohm and Haas Company, with certain basic metal salts in the amounts shown. Gloss does not increase with increasing processing temperature and actually decreases slightly with increasing processing temperature with the various metal systems.

**Table 2** Temperature Effect on Gloss Blends of Elastene™ A-10 Acid Functional Acrylic Polymer with Capstock Base Polymer of Example 2

| Level of Elastene™ A-10 PHR | Die Melt Temp °C | 75° Gloss |
|---|---|---|
| 10 | 160 | 16.5 |
| 10 | 194 | 32.7 |
| 15 | 160 | 10.3 |
| 15 | 194 | 21.5 |
| Z1 =150/Z2 =160/ Z3 =160/ Die 157 and 190 C | | |

**Table 3** Effect of Process Temperature on Gloss 100 parts Capstock Base Polymer of Example 2+15 parts Elastene™ A-10 with Basic Metal Salts

| Basic Metal Salt | 75° Gloss Conditions Z1/Z2/Z3/Die 150/160/160/177°C | 75° Gloss Conditions Z1/Z2/Z3/Die 150/175/195/195°C |
|---|---|---|
| 1% Magnesium oxide | 13.6 | 8.1 |
| 1% Calcium hydroxide | 23 | 14.1 |
| 1% Sodium hydroxide | 12.7 | 8.2 |
| 5% Zinc oxide | 21.6 | 14.1 |

## Example 5

This example demonstrates that using an acid functional acrylic polymer that is not greater than 50 mol percent acrylic based will result in an uneven or coarse surface (*i.e.* it is not compatible with the capstock base polymer). Surlyn® 9450, available from El du Pont de Nemours and Company, is an ethylene - methacrylic acid, zinc salt polymer, which may be compatible with blends of polycarbonate and acrylonitrile-butadiene-styrene. Table 4 shows the effect of mixing Surlyn® 9450, available from El du Pont de Nemours and Company, with an acrylic capstock base polymer of example 1. Gloss is lowered, but the acid functional acrylic polymer is incompatible with the capstock base polymer, as evidenced by a coarse, bumpy surface.

**Table 4** Effect of Surlyn® 9450 + Example 1 Capstock Base Polymer

| % Surlyne 9450 | 75 degree Gloss | Surface Appearance . |
|---|---|---|
| 0 | 60 | Smooth |

Table continued

| % Surlyne 9450 | 75 degree Gloss | Surface Appearance . |
|---|---|---|
| 5 | 35 | Bumpy coarse |
| Surlyn® 9450: 91 PE/9 MAA Zn salt melt index 5.5 | | |

## Example 6

This example demonstrates the level effect of increasing the amount of basic metal salt into the mixture of acid functional acrylic polymer and capstock base polymer. Gloss drops as the metal salt level increases and then levels off. Table 5 shows the effect of magnesium oxide (Elastomag™ 170 from Rohm and Haas Company) level on gloss. Levels of MgO are expressed as weight percent and milliequivalents of Mg per gram of functional acid polymer. Each sample comprises 100 parts of the capstock base polymer of Example 2 , plus 15 parts of an acid functional acrylic polymer Elastene™ A-10, available from Rohm and Haas Company, blended with the amount of basic metal salt shown in the table.

**Table 5** Effect of MgO on Capstock Gloss

| % MgO Elastomag 170 Wt % / meq/gram | 75 degree Gloss | Impact In-lb/40 mil |
|---|---|---|
| 0 | 26.5 | 41 |
| 0.125 / 0.478 meq | 29.5 | 39 |
| 0.25 / 0.957 meq | 19.5 | 36 |
| 0.50/1.918 meq | 12.2. | 41 |
| 1/3.855 meq | 7.6 | 44 |
| 2.5 / 9.786 meq | 6.4 | 42 |
| 5 / 20.087 meq | 6.4 | 32 |
| Z1/Z2/Z3/Die (170 C/185 C/195 C/die 195 C) | | |

Table 6 shows the effect of zinc oxide (Kadox™ 915 from Zinc Corporation of America) level on gloss. Levels of ZnO are expressed as milliequivalents of Zn per gram of functional acid polymer. Each sample comprises 100 parts of the capstock base polymer of Example 2 , plus 15 parts of an acid functional acrylic polymer Elastene™ A-10, available from Rohm and Haas Company, blended with the amount of basic metal salt shown in the table.

**Table 6** Effect of ZnO on Capstock Gloss

| Conditions Z1/Z2/Z3/Die °C | Melt Temp. At Die | Meq. of ZnO K915 | 75°Gloss | Impact In-lb/40 mil |
|---|---|---|---|---|
| 150/170/185/190 | 197 | 9.95 | 13 | 39 |
| 150/170/185/190 | 198 | 15.3 | 12:4 | 35 |
| 150/170/185/190 | 198 | 21.0 | 10 | 37 |

## Example 7

This example demonstrates capstock compositions of the present invention, with one comparative, all processed at the conditions shown below the table. Each composition in Table 7 comprises 100 parts of a Capstock Base Polymer of Example 2 plus 1 wt.% MgO (Elastomag™ 170 from Rohm and Haas Company) plus 15 parts of the acid functional acrylic polymer shown in the table, except for the comparative which does not comprise an acid functional acrylic polymer.

**Table 7** Gloss Control by Polymer Additives

| Acid functional acrylic polymer | 75 degree Gloss | Tg °C | Impact In-lb/40 mil |
|---|---|---|---|
| No acid functional acrylic polymer | 74.5 | - | 38 |
| (44.9 BA / 51 EA / 3.6 AA) | 11.7 | -24 | 39 |

Table continued

| Acid functional acrylic polymer | 75 degree Gloss | Tg °C | Impact In-lb/40 mil |
|---|---|---|---|
| (54.9 BA /32 MMA / 10 Sty / 2.9 AA) | 8.8 | 13 | 34 |
| (45.59 BA /53.2 MMA / 1.3 MAA)* | 15 | 26 | 48 |
| (97 BA / 3 AA) | 8 | -40 | 42 |
| (94 BA/4 Sty/1.8 MAA/0.02 ALMA) | 22.7 | -37 | 44 |
| Z1 - 170 C/Z2 - 185 C/Z3 - 195 C/Die 195 C <br> *0.5 wt.% MgO | | | |

## Example 8

This example demonstrates the effect of varying the level of acid functional acrylic polymer. Each composition in Table 8 comprises an acid functional acrylic polymer Elastene™ A-10, available from Rohm and Haas Company, in the amount shown in the table, blended with 3.85 milliequivalent of MgO (Elastomag™ 170 from Rohm and Haas Company) per gram of the acid functional acrylic polymer and 100 parts of the Capstock Base Polymer of Example 2, all processed at the conditions shown below the table.

### Table 8

| Parts of additive resin per 100 parts of base resin | 75 Degree Gloss | Impact In-lb/40 mil |
|---|---|---|
| 0 | 74.5 | 38 |
| 3.75 | 52.2 | 38 |
| 7.5 | 31.1 | 33 |
| 15 | 10.0 | 42 |
| Z1/Z2/Z3/Die <br> 170/185/195/195 °C Die | | |

## Example 9

This examples demonstrates that combining a capstock base polymer with an acid functional acrylic polymer with a basic metal salt will give low gloss. Table 9 shows the effect of blending an acid functional acrylic polymer Rhoplex™ HG1630, available from Rohm and Haas Company, with different thermoplastic polymers used as a capstock base polymer, with and without a basic salt.

**Table 9** Blends of Rhoplex™ HG1630 Acid Functional Acrylic Polymer with Thermoplastic Polymer

| Thermoplastic Polymer 100 parts | Parts Rhoplek™ HG1630 | Parts MgO | 75° Gloss |
|---|---|---|---|
| Plexiglas™VS100 | 0 | 0 | 105 |
| Plexiglas™ VS100 | 15 | 2.3 | 12 |
| Geloy™ 1020 | 0 | 0 | 64 |
| Geloy™1020 | 15 | 2.3 | 13 |
| Lustran™ Sparkle | 0 | 0 | 133 |
| Lustran™ Sparkle | 15 | 2.3 | 60.6 |
| Plexiglas VS100 is available from Atofina. Geloy 1020 is available from GE Plastics. Lustran Sparkle is available from Bayer. | | | |

## Example 10

This examples demonstrates the weatherability of composites made according to the present invention. Table 10 shows a formulated capstock, comprising a thermoplastic polymer, an acid functional acrylic polymer and a basic metal salt, along with additional additives. Table 11 shows a formulated PVC substrate resin.

**Table 10** Blends of Elastene™ A-10 Acid Functional Acrylic Polymer, Elastomag™ 170 (MgO) and Thermoplastic Polymer of Example 2

| Material | Parts |
|---|---|
| Example 2 resin | 100 |
| Elastene A-10 | 15 |
| Tinuvin 328 | 0.8 |
| Tinuvin 770 | 0.23 |
| Elastomag 170 | 1.17 |
| Herringbone Blue color concentrate | 4 |

Tinuvin 328 and Tinuvin 770 are available from Ciba. Herringbone Blue is available from Penn Color.

**Table 11** Formulated PVC Substrate Resin

| Material | Parts per 100 |
|---|---|
| PVC (Oxy 222) | 100 |
| Advastab TM-181 | 0.9 |
| Calcium Stearate | 1.4 |
| Paraffin Wax 165 | 0.9 |
| PE Wax AC629A | 0.1 |
| Paraloid K120 N | 0.5 |
| Paraloid KM334 | 4.5 |
| Omya $CaCO_3$ (UFT) | 10.0 |
| $TiO_2$ (RCL-4) | 1.0 |

Oxy 222 is available from Oxyvinyls. Advastab TM-181, Paraloid K120N and Paraloid KM334 are available from Rohm and Haas Company. Paraffin Wax 165 is available from Clariant. PE Wax AC629A is available from Allied Signal. Omya is available from Omya Inc.. RCL-4 is available from SCM Pigments.

The capstock material of Table 10 is extruded using a dual manifold die where the capstock is extruded with a 35 mm Cincinnati Milacron twin screw extruder with all zones set at 160°C and the die set at 180 °C. The PVC substrate of Table 11 is extruded with a 52 mm Basusano twin screw extruder with all zones and die set at 180°C. The co-extruded composite has a total thickness of 50 mils with a 10 mil layer of capstock on top of 40 mils of PVC substrate. Table 12 shows the results of the co-extruded composite.

**Table 12** Properties of Co-Extruded Composite

| Property | Value |
|---|---|
| 75 Gloss | 13.7 |
| Dart Impact | 96 in-lb/40 mils |
| Delta E 1000 hrs | 0.38 |
| Delta E 3000 hrs | 0.49 |

**Claims**

1.  A thermoplastic composition exhibiting reduced gloss, comprising:

(a) a thermoplastic polymer comprising a homopolymer or copolymer derived from polymerizing at least one ethylenically unsaturated monomer;

(b) at least one percent (1%) by weight of an acid functional acrylic polymer comprising a copolymer with an acid functionality level of at least 0.1 milliequivalent per gram of acid functional acrylic polymer, derived from polymerizing at least one ethylenically unsaturated monomer having acid functionality with at least one other ethylenically unsaturated monomer, wherein the acrylic content of the acid functional acrylic polymer is greater than 50 mol percent; and

(c) at least 0.1 milliequivalents of a basic metal salt per gram of the acid functional acrylic polymer.

2. The thermoplastic composition of Claim 1 wherein the thermoplastic polymer comprises:

(a) from 50 to 100 parts by weight of a first medium rubber core/shell polymer, and

(b) from 0 to 50 parts by weight of a second high rubber core/shell polymer, wherein the shell polymer has a molecular weight in the range of from 25,000 to 350,000 g/mol.

3. The thermoplastic composition of Claim 2 wherein the thermoplastic polymer further comprises a non-core/shell polymer.

4. The thermoplastic composition of Claim 1, wherein the basic metal salt is one or more of zinc oxide, zirconium oxide, magnesium oxide, magnesium hydroxide, calcium oxide, calcium hydroxide, alkali metal hydroxides, alkali metal carbonates, alkali metal phosphates, alkali metal borates, alkali metal silicates and/or combinations of the above.

5. The thermoplastic composition of Claim 1 further comprising one or more additives selected from the group consisting of UV light stabilizers, pigments, powder flow aids, processing aids and combinations thereof.

6. The thermoplastic composition of Claim 1 further comprising from 0 to 100 parts by weight of at least one poly(vinyl chloride) resin.

7. A synthetic composite comprising:

(a) an extrudable thermoplastic, substrate layer and

(b) an extrudable thermoplastic capstock layer disposed thereon comprising

(i) a thermoplastic polymer comprising a homopolymer or copolymer derived from polymerizing at least one ethylenically unsaturated monomer;

(ii) at least one percent (1 %) by weight of an acid functional acrylic polymer comprising a copolymer with an acid functionality level of at least 0.1 milliequivalent per gram of acid functional acrylic polymer, derived from polymerizing at least one ethylenically unsaturated monomer having acid functionality with at least one other ethylenically unsaturated monomer, wherein the acrylic content of the acid functional acrylic polymer is greater than 50 mol percent; and

(iii) at least 0.1 miltiequivalents of a basic metal salt per gram of the acid functional acrylic polymer.

8. The synthetic composite of Claim 7 wherein the thermoplastic polymer of the capstock layer comprises:

(a) from 50 to 100 parts by weight of a first medium rubber core/shell polymer; and

(b) from 0 to 50 parts by weight of a second high rubber core/shell polymer, wherein the shell polymer has a molecular weight in the range of from 25,000 to 350,000 g/mol.

9. The synthetic composite of Claim 8 wherein the thermoplastic polymer of the capstock layer further comprises a non-core/shell polymer.

10. The synthetic composite of Claim 7 wherein the basic metal salt is one or more of zinc oxide, zirconium oxide, magnesium oxide, magnesium hydroxide, calcium oxide, calcium hydroxide, alkali metal hydroxides, alkali metal carbonates, alkali metal phosphates, alkali metal borates, alkali metal silicates and/or combinations of the above.

11. The synthetic composite of Claim 7 wherein the thermoplastic substrate layer comprises one or more polymers selected from the group consisting of poly(vinyl chloride), chlorinated poly(vinyl chloride), high impact polystyrene, polypropylene, acrylonitrile-butadiene-styrene, and combinations thereof.

12. The synthetic composite of Claim 7 wherein the capstock layer has an average gloss measured at a 75 degree incident angle geometry of less than 60.

13. The synthetic composite of Claim 7 wherein the capstock layer has a drop dart impact strength of greater than 28.8 kg-cm (25 in-lbs) per 1mm (40 mils) thickness at 23°C according to ASTM D4226.

14. The synthetic composite of Claim 7 wherein the capstock layer has a ΔE value of 2.0 or less after 3000 hours of accelerated weathering according to ASTM D4329 Cycle C.

**Patentansprüche**

1. Thermoplastische Zusammensetzung, welche verringerten Glanz zeigt, umfassend:

   (a) ein thermoplastisches Polymer, welches ein Homopolymer oder Copolymer, welches durch Polymerisieren mindestens eines ethylenisch ungesättigten Monomers gewonnen ist, umfasst,
   (b) mindestens ein Gewichtsprozent (1%) eines säurefunktionellen Acrylpolymers, welches ein Copolymer mit einem Säurefunktionalitätsgrad von mindestens 0,1 Milliäquivalenten pro Gramm an säurefunktionellem Acrylpolymer, welches durch Polymerisieren mindestens eines ethylenisch ungesättigten Monomers mit einer Säurefunktionalität mit mindestens einem anderen ethylenisch ungesättigten Monomer gewonnen ist, umfasst, wobei der Acrylgehalt des säurefunktionellen Acrylpolymers größer als 50 Molprozent ist, und
   (c) mindestens 0,1 Milliäquivalente eines basischen Metallsalzes pro Gramm des säurefunktionellen Acrylpolymers.

2. Thermoplastische Zusammensetzung nach Anspruch 1, wobei das thermoplastische Polymer

   (a) von 50 bis 100 Gewichtsteile eines ersten Mittelkautschuk-Kern/Schale-Polymers und
   (b) von 0 bis 50 Gewichtsteile eines zweiten Hochkautschuk-Kem/Schale-Polymers, wobei das Schalenpolymer ein Molekulargewicht in dem Bereich von 25.000 bis 350.000 g/mol aufweist, umfasst.

3. Thermoplastische Zusammensetzung nach Anspruch 2, wobei das thermoplastische Polymer ferner ein Nicht-Kem/Schale-Polymer umfasst.

4. Thermoplastische Zusammensetzung nach Anspruch 1, wobei das basische Metallsalz eines oder mehrere von Zinkoxid, Zirkoniumoxid, Magnesiumoxid, Magnesiumhydroxid, Calciumoxid, Calciumhydroxid, Alkalimetallhydroxiden, Alkalimetallcarbonaten, Alkalimetallphosphaten, Alkalimetallboraten, Alkalimetallsilicaten und/oder Kombinationen der vorstehenden ist.

5. Thermoplastische Zusammensetzung nach Anspruch 1, ferner umfassend ein oder mehrere Additive, ausgewählt aus der Gruppe, bestehend aus UV-LichtStabilisatoren, Pigmenten, Pulverflusshüfsmitteln, Verarbeitungshilfsmitteln und Kombinationen davon.

6. Thermoplastische Zusammensetzung nach Anspruch 1, ferner umfassend von 0 bis 100 Gewichtsteile mindestens eines Poly(vinylchlorid)harzes.

7. Synthetischer Verbundwerkstoff, umfassend:

   (a) eine extrudierbare thermoplastische Substratschicht und
   (b) eine darauf aufgebrachte extrudierbare thermoplastische Capstock- bzw. Oberflächenschicht, umfassend

      (i) ein thermoplastisches Polymer, welches ein Homopolymer oder Copolymer, welches durch Polymerisieren mindestens eines ethylenisch ungesättigten Monomers gewonnen ist, umfasst,
      (ii) mindestens ein Gewichtsprozent (1%) eines säurefunktionellen Acrylpolymers, welches ein Copolymer mit einem Säurefunktionalitätsgrad von mindestens 0,1 Milliäquivalenten pro Gramm an säurefunktionellem Acrylpolymer, welches durch Polymerisieren mindestens eines ethylenisch ungesättigten Monomers mit einer Säurefunktionalität mit mindestens einem anderen ethylenisch ungesättigten Monomer gewonnen ist, umfasst, wobei der Acrylgehalt des säurefunktionellen Acrylpolymers größer als 50 Molprozent ist, und
      (iii) mindestens 0,1 Milliäquivalente eines basischen Metallsalzes pro Gramm des säurefunktionellen Acrylpolymers.

**8.** Synthetischer Verbundwerkstoff nach Anspruch 7, wobei das thermoplastische Polymer der Capstockschicht

(a) von 50 bis 100 Gewichtsteile eines ersten Mittelkautschuk-Kem/Schale-Polymers und
(b) von 0 bis 50 Gewichtsteile eines zweiten Hochkautschuk-Kem/Schale-Polymers, wobei das Schalenpolymer ein Molekulargewicht in dem Bereich von 25.000 bis 350.000 g/mol aufweist, umfasst.

**9.** Synthetischer Verbundwerkstoff nach Anspruch 8, wobei das thermoplastische Polymer der Capstockschicht ferner ein Nicht-Kern/Schale-Polymer umfasst.

**10.** Synthetischer Verbundwerkstoff nach Anspruch 7, wobei das basische Metallsalz eines oder mehrere von Zinkoxid, Zirkoniumoxid, Magnesiumoxid, Magnesiumhydroxid, Calciumoxid, Calciumhydroxid, Alkalimetallhydroxiden, Alkalimetallcarbonaten, Alkalimetallphosphaten, Alkalimetallboraten, Alkalimetallsilicaten und/oder Kombinationen der vorstehenden ist.

**11.** Synthetischer Verbundwerkstoff nach Anspruch 7, wobei die thermoplastische Substratschicht ein oder mehrere Polymere, ausgewählt aus der Gruppe, bestehend aus Poly(vinylchlorid), chloriertem Poly(vinylchlorid), hochschlagfestem Polystyrol, Polypropylen, Acrylnitril-Butadien-Styrol und Kombinationen davon, umfasst.

**12.** Synthetischer Verbundwerkstoff nach Anspruch 7, wobei die Capstockschicht einen mittleren Glanz, gemessen bei einer 75 Grad Einfallswinkelgeometrie, von weniger als 60 aufweist.

**13.** Synthetischer Verbundwerkstoff nach Anspruch 7, wobei die Capstockschicht eine Pfeilfall-Schlagfestigkeit von größer als 28,8 kg-cm (25 in-lbs) pro 1 mm (40 mils) Dicke bei 23°C gemäß ASTM D4226 aufweist.

**14.** Synthetischer Verbundwerkstoff nach Anspruch 7, wobei die Capstockschicht einen $\Delta$E-Wert von 2,0 oder weniger nach 3000 Stunden an beschleunigter Bewitterung gemäß ASTM D4329 Zyklus C aufweist.

**Revendications**

**1.** Composition thermoplastique présentant un brillant réduit, qui comprend :

(a) un polymère thermoplastique comprenant un homopolymère ou un copolymère dérivé de la polymérisation d'au moins un monomère insaturé éthylénique ;
(b) au moins un pour cent (1 %) en poids d'un polymère acrylique à fonction acide comprenant un copolymère avec un niveau de fonction acide d'au moins 0,1 milli-équivalent par gramme de polymère acrylique à fonction acide, dérivé de la polymérisation d'au moins un monomère insaturé éthylénique ayant une fonction acide, **caractérisée en ce que** le contenu en acrylique du polymère acrylique à fonction acide est supérieur à 50 moles pour cent ; et
(c) au moins 0,1 milli-équivalent d'un sel métallique basique par gramme du polymère acrylique à fonction acide.

**2.** Composition thermoplastique selon la revendication 1, **caractérisée en ce que** le polymère thermoplastique comprend :

(a) de 50 à 100 parties en poids d'un premier polymère à coeur et à coque moyennement caoutchouteux ; et
(b) de 0 à 50 parties en poids d'un second polymère à coeur et à coque hautement caoutchouteux, **caractérisée en ce que** le polymère coque a une masse moléculaire allant de 25.000 à 350.000 g/mole.

**3.** Composition thermoplastique selon la revendication 2, **caractérisée en ce que** le polymère thermoplastique comprend en plus un polymère qui n'est pas à coeur et à coque.

**4.** Composition thermoplastique selon la revendication 1, **caractérisée en ce que** le sel métallique basique est un ou plusieurs, choisis parmi l'oxyde de zinc, l'oxyde de zirconium, l'oxyde de magnésium, l'hydroxyde de magnésium, l'oxyde de calcium, l'hydroxyde de calcium, les hydroxydes de métaux alcalins, les carbonates de métaux alcalins, les phosphates de métaux alcalins, les borates de métaux alcalins, les silicates de métaux alcalins et les combinaisons de ceux ci-dessus.

**5.** Composition thermoplastique selon la revendication 1, qui comprend en plus un ou plusieurs additifs choisis dans le groupe constitué de stabilisants à la lumière UV, de pigments, d'aides à l'écoulement des poudres, des aides à la transformation et leurs combinaisons.

**6.** Composition thermoplastique selon la revendication 1, qui comprend en plus de 0 à 100 parties d'au moins une résine de poly(chlorure de vinyle).

**7.** Composite synthétique comprenant :

(a) une couche de substrat thermoplastique extrudable et
(b) une couche de couverture thermoplastique disposée dessus, comprenant :

(i) un polymère thermoplastique comprenant un homopolymère ou un copolymère dérivé de la polymérisation d'au moins un monomère insaturé éthylénique ;
(ii) au moins un pour cent (1 %) en poids d'un polymère acrylique à fonction acide comprenant un copolymère avec un niveau de fonction acide d'au moins 0,1 milli-équivalent par gramme de polymère acrylique à fonction acide, dérivé de la polymérisation d'au moins un monomère insaturé éthylénique ayant une fonction acide, **caractérisée en ce que** le contenu en acrylique du polymère acrylique à fonction acide est supérieur à 50 moles pour cent ; et
(iii) au moins 0,1 milli-équivalent d'un sel métallique basique par gramme du polymère acrylique à fonction acide.

**8.** Composite synthétique selon la revendication 7, **caractérisé en ce que** le polymère thermoplastique de la couche de couverture comprend :

(a) de 50 à 100 parties en poids d'un premier polymère à coeur et à coque moyennement caoutchouteux ; et
(b) de 0 à 50 parties en poids d'un second polymère à coeur et à coque hautement caoutchouteux, **caractérisée en ce que** le polymère coque a une masse moléculaire allant de 25.000 à 350.000 g/mole.

**9.** Composite synthétique selon la revendication 8, **caractérisé en ce que** le polymère thermoplastique de la couche de couverture comprend en plus un polymère qui n'est pas à coeur et à coque.

**10.** Composite synthétique selon la revendication 7, **caractérisé en ce que** le sel métallique basique en est un ou plusieurs choisis parmi l'oxyde de zinc, l'oxyde de zirconium, l'oxyde de magnésium, l'hydroxyde de magnésium, l'oxyde de calcium, l'hydroxyde de calcium, les hydroxydes de métaux alcalins, les carbonates de métaux alcalins, les phosphates de métaux alcalins, les borates de métaux alcalins, les silicates de métaux alcalins et les combinaisons de ceux ci-dessus.

**11.** Composite synthétique selon la revendication 7, **caractérisé en ce que** la couche de substrat thermoplastique comprend un ou plusieurs polymères choisis dans le groupe comprenant le poly(chlorure de vinyle), le poly(chlorure de vinyle) chloré, le polystyrène à grande résistance aux chocs, le polypropylène, un polymère acrylonitrile-butadiène-styrène et leurs combinaisons.

**12.** Composite synthétique selon la revendication 7, **caractérisé en ce que** la couche de couverture a un brillant moyen, pour une géométrie d'angle d'incidence de 75 degrés, inférieur à 60.

**13.** Composite synthétique selon la revendication 7, **caractérisé en ce que** la couche de couverture a une résistance à l'impact par flèche supérieure à 28,8 kg-cm (25 in-lbs) pour une épaisseur de 1 mm (40 mils) à 23°C selon la norme ASTM D4226.

**14.** Composite synthétique selon la revendication 7, **caractérisé en ce que** la couche de couverture a une valeur de $\Delta E$ égale ou inférieure à 2,0 après 3000 heures de vieillissement climatique accéléré, selon la norme ASTM D4329 Cycle C.